# EUROPEAN PATENT SPECIFICATION

(11) **EP 3 192 729 B1**
(45) Date of publication and mention of the grant of the patent: **06.05.2020**
(21) Application number: 16207501.4
(22) Date of filing: 30.12.2016
(51) Int. Cl.: B62J 17/04

(54) **STRADDLED VEHICLE**
GRÄTSCHSITZFAHRZEUG
VÉHICULE-CAVALIER

(30) Priority: 08.01.2016 JP 2016003015
(43) Date of publication of application: 19.07.2017
(73) Proprietor: Yamaha Hatsudoki Kabushiki Kaisha, Iwata-shi, Shizuoka 438-8501 (JP)
(72) Inventor: SAITA, Alessandro, 20855 Gerno di Lesmo (MB) (IT)
(74) Representative: Zimmermann, Tankred Klaus

(56) References cited:
- EP-A2- 2 711 274
- GB-A- 733 208
- US-A- 4 606 571
- US-A1- 2011 101 724
- US-B1- 6 293 606

## Description

### BACKGROUND OF THE INVENTION

### Field of the Invention

The present invention relates to a straddled vehicle including a windscreen.

### Description of Related Art

A windscreen is provided at a front portion of a straddled vehicle in order to reduce an amount of air flow received by a rider during travelling. The amount of air flow received by the rider can be reduced by an increase in height of a position of the windscreen. On the one hand, the travelling resistance of a vehicle increases depending on the height of the windscreen. Therefore, the height of the windscreen is preferably changeable according to a physique of the rider, usage of the vehicle and the like.

Various configurations have been suggested as a motorcycle in which the height of the windscreen is changeable. In the motorcycle described in JP 2012-171438 A, a plurality of bolt through holes are formed in the windscreen. Further, a plurality of upper attachment holes and a plurality of lower attachment holes for attaching the windscreen to a screen stay are provided. The EP 2711274 A2, which discloses the preamble of claim 1, describes a manual windshield adjusting system including a rail adapted for connection to the vehicle (connected to the windshield of the vehicle).

A user can fix the windscreen at a high position by positioning the windscreen and the screen stay such that the plurality of bolt through holes respectively overlap with the plurality of upper attachment holes, and attaching a plurality of bolts to the plurality of upper attachment holes through the plurality of bolt through holes. Further, the user can fix the windscreen at a low position by positioning the windscreen and the screen stay such that the plurality of bolt through holes respectively overlap with the plurality of lower attachment holes, and attaching the plurality of bolts to the plurality of lower attachment holes through the plurality of bolt through holes.

### BRIEF SUMMARY OF THE INVENTION

However, in an attachment structure of the windscreen described in JP 2012-171438 A, the height of the windscreen in the straddled vehicle can only be changed in two levels. Further, an operation for changing the height of the windscreen is complicated.

On the one hand, in a configuration in which the height of the windscreen is changed to any height with the use of an actuator, the configurations of surroundings of the windscreen are complicated, and the cost increases.

An object of the present invention is to provide a straddled vehicle in which a height of a windscreen can be changed to a desired height with a simple configuration, by a simple operation and at low cost.
(1) A straddled vehicle according to one aspect of the present invention, which invention is defined by claim 1, includes a vehicle main body that includes a body frame, a windscreen, and a screen support mechanism that supports the windscreen at the vehicle main body such that a height of the windscreen is adjustable, wherein the screen support mechanism includes a first element fixed to the vehicle main body, a second element fixed to the windscreen, and a holding element changeable between a first state where the holding element fixes the first element and the second element to each other and a second state where the holding element holds the second element to be movable with respect to the first element, one of the first and second elements has a recess-convex group alternately including a plurality of recess portions and a plurality of convex portions arranged in a first direction, and the first direction is a top-and-bottom direction in a vehicle front view, another one of the first and second elements has a fitting portion that includes at least one convex portion or recess portion that can be fitted with the recess-convex group, and the second element is fixed to the first element when the fitting portion is fitted with the recess-convex group, and the holding element is in the first state, and movable in the first direction with respect to the first element when the fitting portion is not fitted with the recess-convex group, and the holding element is in the second state.
   In the straddled vehicle, when the holding element of the screen support mechanism is in the second state, the second element is held by the holding element to be movable with respect to the first element. Therefore, the user changes the state of the holding element from the first state to the second state, then moves the windscreen in the first direction together with the second element, and fits the fitting portion with the recess-convex group at a desired position. Thus, the second element can be positioned with respect to the first element. Thereafter, the user can fix the second element to the first element by changing the state of the holding element from the second state to the first state. Thus, the user can adjust the height of the windscreen with respect to the vehicle main body to a desired height.
   In this case, it is not necessary to perform an operation of detaching the windscreen from the screen support mechanism or the vehicle main body and attaching it again. Further, it is not necessary to use an actuator in order to adjust the height of the windscreen. Therefore, the height of the windscreen can be adjusted to a desired height with a simple configuration, by a simple operation and at low cost.
(2) At least one of the windscreen and the second element may have a bolt hole, the windscreen and the second element may be fixed to each other by a first bolt passing through the bolt hole, and the plurality of recess portions of the recess-convex group may be arranged at a pitch smaller than a diameter of the bolt hole.
   In this case, a pitch that can be used to position the second element with respect to the first element is smaller than the diameter of the bolt hole. Thus, the height of the windscreen can be finely adjusted.
(3) The straddled vehicle may further include a guide portion that guides the second element to be movable in the first direction with respect to the first element, wherein the guide portion, when the holding element is in the second state, may be configured to limit a movement range of the second element in the first direction with respect to the first element to a first range, and limit a movement range of the second element in a second direction orthogonal to the first direction with respect to the first element to a second range smaller than the first range.
   In this case, when the holding element is in the second state, the second element is moved in the first direction by the guide portion. At this time, because the movement range of the second element in the second direction with respect to the first element is limited to the second range smaller than the first range, the second element can be smoothly moved in the first direction with respect to the first element.
(4) The guide portion may include an engaging portion provided at one of the first and second elements to extend in the first direction, and an engaged portion provided at another one of the first and second elements to be engaged with the engaging portion, and the engaging portion may be configured to guide the engaged portion to be movable in the first direction, limit a movement range of the engaged portion in the first direction to the first range, and limit a movement range of the engaged portion in a vehicle left-and-right direction to the second range.
   In this case, the engaging portion limits the movement range of the engaged portion in the first direction to the first range, and limits the movement range of the engaged portion in the vehicle left-and-right direction to the second range smaller than the first range. Thus, during the adjustment of the height of the windscreen, the windscreen can be smoothly moved in the first direction while swinging of the windscreen to the left and right is prevented. As a result, a load applied to the screen support mechanism is reduced, and durability of the screen support mechanism is improved.
(5) The engaging portion may include a slit-shape opening extending in the first direction, and the engaged portion may include a guide shaft inserted into the slit-shape opening.
   In this case, the windscreen can be smoothly moved in the first direction with a simple configuration.
(6) The engaging portion may be configured to limit a movement range of the engaged portion in a vehicle front-and-rear direction to a third range smaller than the first range.
   In this case, the movement range of the engaged portion in the vehicle front-and-rear direction is limited to the third range smaller than the first range. Thus, during the adjustment of the height of the windscreen, the windscreen can be smoothly moved in the first direction while swinging of the windscreen in the front-and-rear direction is prevented. Further, during the adjustment of the height of the windscreen, the second element is prevented from being disengaged from the first element.
(7) The engaging portion may include a slit-shape opening extending in the first direction, and the engaged portion may include a guide shaft inserted into the slit-shape opening, and a stopper provided at a tip end of the guide shaft, and a measurement of the stopper in the vehicle left-and-right direction is larger than a width of the slit-shape opening in the vehicle left-and-right direction.
   In this case, the windscreen can be smoothly moved in the first direction with a simple configuration, and the second element can be prevented from being disengaged from the first element.
(8) The holding element may include a second bolt and a nut, one of the second bolt and the nut may be a fixed fastening member fixed to the other one of the first and second elements, and another one of the second bolt and the nut is a movable fastening member rotatable with respect to the fixed fastening member, the nut may be attached to a screw portion of the second bolt that projects from the slit-shape opening with the second bolt inserted into the slit-shape opening, the holding element may be changeable between the first state and the second state according to a fastening level of the movable fastening member to the fixed fastening member, the guide shaft may include a portion of the second bolt except for a head portion, and the stopper may include the nut or the head portion of the second bolt.
   In this case, the user can change the state of the holding element between the first state and the second state according to the fastening level of the movable fastening member to the fixed fastening member. Therefore, the user can switch between the first and second states of the holding element by a simple operation.
   Further, in the above-mentioned configuration, the second element is guided in the first direction with respect to the first element by the insertion of the second bolt into the slit-shape opening. Therefore, the guide portion is realized by a simple configuration. Further, because the second bolt serves as a component of the holding element and a component of the guide portion, the number of members is reduced.
(9) The movable fastening member may have a gripper that can be gripped by a user.
   In this case, the user can adjust the fastening level of the movable fastening member while gripping the gripper.
(10) The gripper may be positioned on a rear side of the windscreen.
   In this case, the user can operate the gripper while riding the straddled vehicle.
(11) The straddled vehicle may further include a display device that displays information related to a state of the vehicle, wherein the display device may be provided at a position where the display device can be viewed by a rider, and the gripper may be arranged at a position further upward than the display device.
   In this case, the rider can operate the gripper more easily.
(12) The second element may have an area and a volume that are smaller than those of the first element.
   In this case, the second element having small area and volume moves with respect to the first element having large area and volume. Thus, an increase in size of the straddled vehicle can be inhibited.
(13) The straddled vehicle may further include a headlamp supporter that supports a headlamp at the vehicle main body, wherein the headlamp supporter may also serve as the first element.

In this case, because the headlamp supporter also serves as the first element of the screen support mechanism, the number of members of the straddled vehicle is reduced, and a decrease in size of the straddled vehicle is realized.

### BRIEF DESCRIPTION OF THE SEVERAL VIEWS OF THE DRAWING

Fig. 1 is a side view of one side of a motorcycle according to one embodiment of the present invention;
Fig. 2(a) is an enlarged front view of an upper portion at a front end of the motorcycle,
Fig. 2(b) is an enlarged side view of the upper portion at the front end of the motorcycle;
Fig. 3(a) is an enlarged front view of the upper portion at the front end of the motorcycle showing a state where a position of a windscreen is changed to a position higher than a position in Figs. 2(a) and 2(b);
Fig. 3(b) is an enlarged side view of the upper portion at the front end of the motorcycle showing a state where the position of the windscreen is changed to the position higher than the position in Figs. 2(a) and 2(b);
Fig. 4(a) is a front view of a headlamp stay;
Fig. 4(b) is a side view of the headlamp stay:
Figs. 5(a) and 5(b) are a plan view and a side view of the windscreen;
Fig. 6(a) is a plan view of a screen stay;
Fig. 6(b) is a bottom view of the screen stay;
Fig. 6(c) is a side view of the screen stay;
Fig. 7 is a partially cutaway side view showing attachment work and adjustment work of the screen stay with respect to the headlamp stay;
Fig. 8 is a partially cutaway side view showing the attachment work and the adjustment work of the screen stay with respect to the headlamp stay;
Fig. 9 is a partially cutaway side view showing the attachment work and the adjustment work of the screen stay with respect to the headlamp stay;
Fig. 10 is a partially cutaway side view showing the attachment work and the adjustment work of the screen stay with respect to the headlamp stay;
Fig. 11 is a partially cutaway side view showing the attachment work and the adjustment work of the screen stay with respect to the headlamp stay; and
Fig. 12 is mainly an appearance of the windscreen of Fig. 1 and a meter unit as viewed from behind a head pipe.

### DESCRIPTION OF THE PREFERRED EMBODIMENTS

A straddled vehicle according to one embodiment of the present invention will be described below with reference to the drawings. In the following description, a motorcycle is described as one example of the straddled vehicle.

### (1) Configuration of Motorcycle

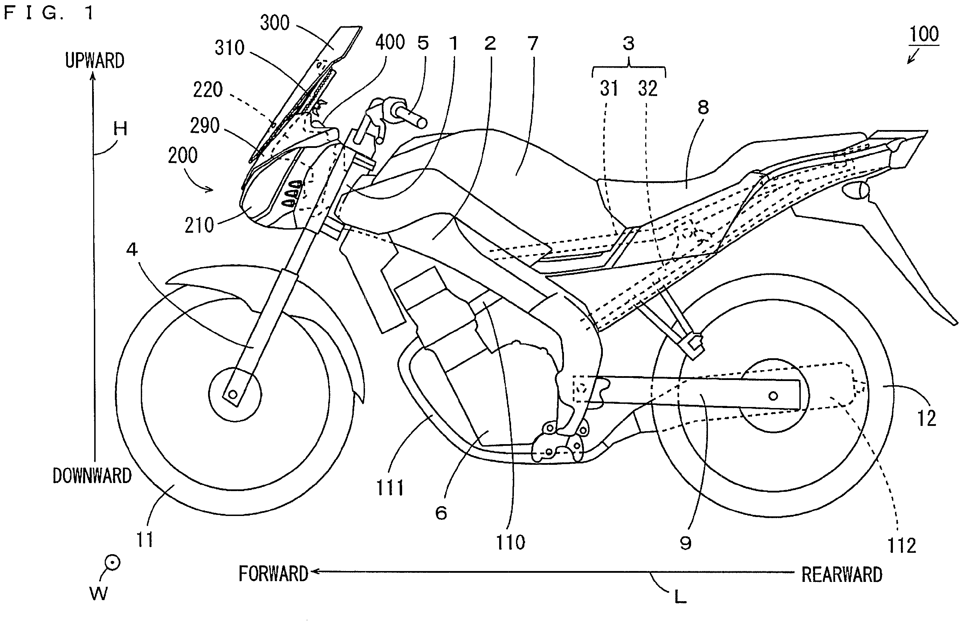

Fig. 1 is a side view of one side of the motorcycle according to one embodiment of the present invention. In Fig. 1, the motorcycle 100 standing up to be perpendicular to the road surface is shown. In Fig. 1 and part of subsequent given diagrams, a front-and-rear direction L, a left-and-right direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the left-and-right direction W is referred to as leftward, and its opposite direction is referred to as rightward. Further, a direction in which the arrow is directed in the top-and-bottom direction H is referred to as upward, and its opposite direction is referred to as downward.

As shown in Fig. 1, the motorcycle 100 includes a head pipe 1, a main frame 2 and a sub-frame 3. The main frame 2 extends obliquely rearward and downward from the head pipe 1. The rear end of the main frame 2 is curved downward.

The sub-frame 3 includes an upper frame 31 and a lower frame 32. The upper frame 31 is provided to extend rearward from substantially the center portion of the main frame 2. The lower frame 32 is provided to extend rearward and upward from the rear end of the main frame 2. The rear end of the lower frame 32 is joined to the lower end of the upper frame 31 in the vicinity of the rear end of the upper frame 31.

A headlamp unit 200 is provided at a position forward of the head pipe 1. The headlamp unit 200 includes a pair of left and right headlamps 210, a headlamp stay 220 and a front cover 290. The headlamp stay 220 is fixed to the head pipe 1. The pair of left and right headlamps 210 is attached to the headlamp stay 220. The front cover 290 is provided to cover part of the headlamp stay 220 from the front.

A windscreen 300 is provided at an upper portion of the headlamp stay 220 via a screen stay 310. The windscreen 300 reduces an amount of air flow received by a rider during travelling of the motorcycle 100. Details of the headlamp stay 220, the windscreen 300 and the screen stay 310 will be described below.

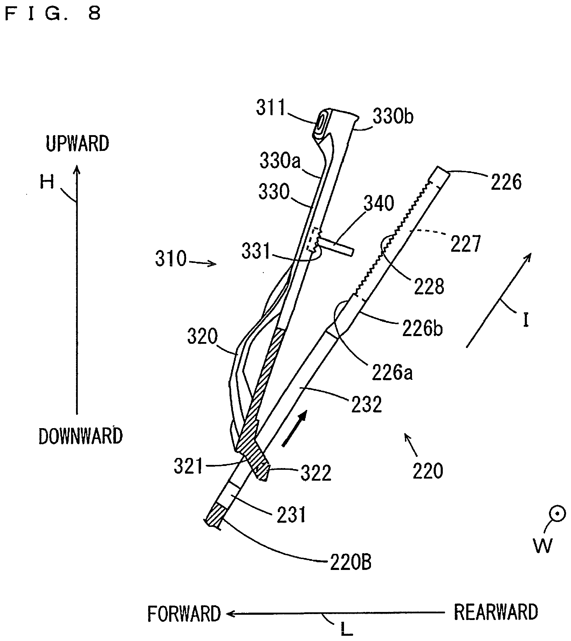

A meter unit 400 is provided between the upper end of the head pipe 1 and the windscreen 300. The meter unit 400 is supported by the head pipe 1, for example, and includes a display 410 (Fig. 8), descried below. The display 410 displays various types of information related to the vehicle such as a speed of the vehicle, a remaining amount of fuel and the like. The meter unit 400 may be supported by the headlamp stay 220 instead of the head pipe 1.

The front fork 4 is provided at the head pipe 1 to be swingable in the left-and-right direction. A front wheel 11 is rotatably supported at the lower end of the front fork 4. A handle 5 is attached to the upper end of the front fork 4. An engine 6 is provided at a lower portion of the main frame 2. One end of an intake pipe 110 is attached to an intake port of the engine 6, and one end of an exhaust pipe 111 is attached to an exhaust port of the engine 6. A muffler 112 is attached to the other end of the exhaust pipe 111.

Part of the upper frame 31 is positioned over the engine 6. A fuel tank 7 is supported by the main frame 2 and the upper frame 31 at a position over the engine 6. A seat 8 is supported by the upper frame 31 at a position rearward of the fuel tank 7. The seat 8 of the present example is a seat of which two seating portions are integrally formed. A rear arm 9 is provided to extend rearward from a lower portion of the rear end of the main frame 2. A rear wheel 12 is rotatably supported at the rear end of the rear arm 9. The rear wheel 12 is rotated as a drive wheel by motive power generated by the engine.

In the motorcycle 100 according to the present embodiment, an assembly of constituent elements except for the headlamp unit 200, the windscreen 300 and the screen stay 310 among the plurality of above-mentioned constituent elements is equivalent to a vehicle main body of the present invention.

### (2) Configuration of Windscreen and Its Peripheral Portions

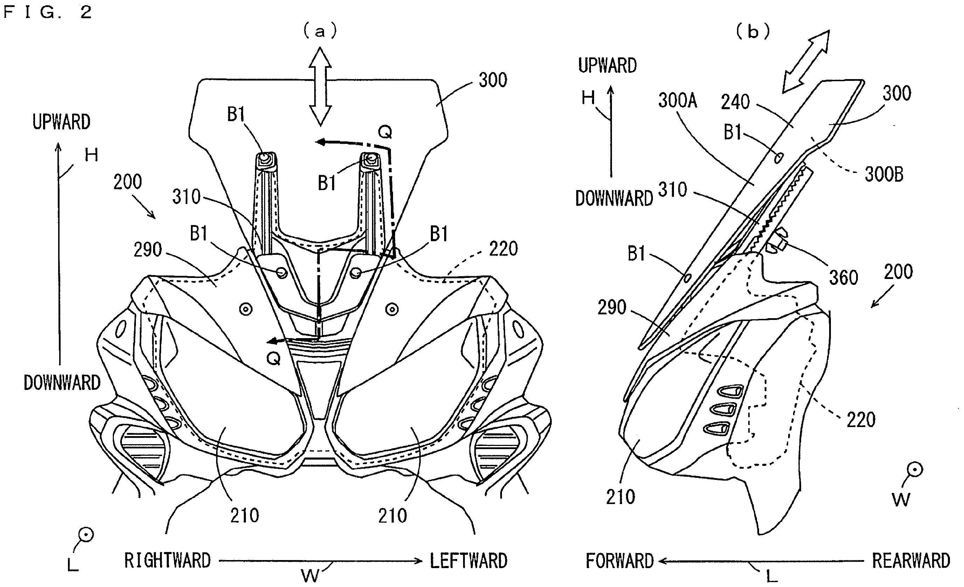

Fig. 2(a) is an enlarged front view of an upper portion of the front end of the motorcycle 100, and Fig. 2(b) is an enlarged side view of the upper portion of the front end of the motorcycle 100. In each of Figs. 2(a) and 2(b), the constituent elements except for the headlamp unit 200, the windscreen 300 and the screen stay 310 are not shown.

As shown in Fig. 2(b), the windscreen 300 has a screen surface 300A and a screen back surface 300B. The screen stay 310 is fixed to the screen back surface 300B by a plurality (four in the present example) of bolts B1. The screen stay 310 is attached to an upper portion of the headlamp stay 220.

In the motorcycle 100 of the present example, as indicated by outlined arrows in Figs. 2(a) and 2(b), a position of the windscreen 300 in the top-and-bottom direction H (height) can be adjusted.

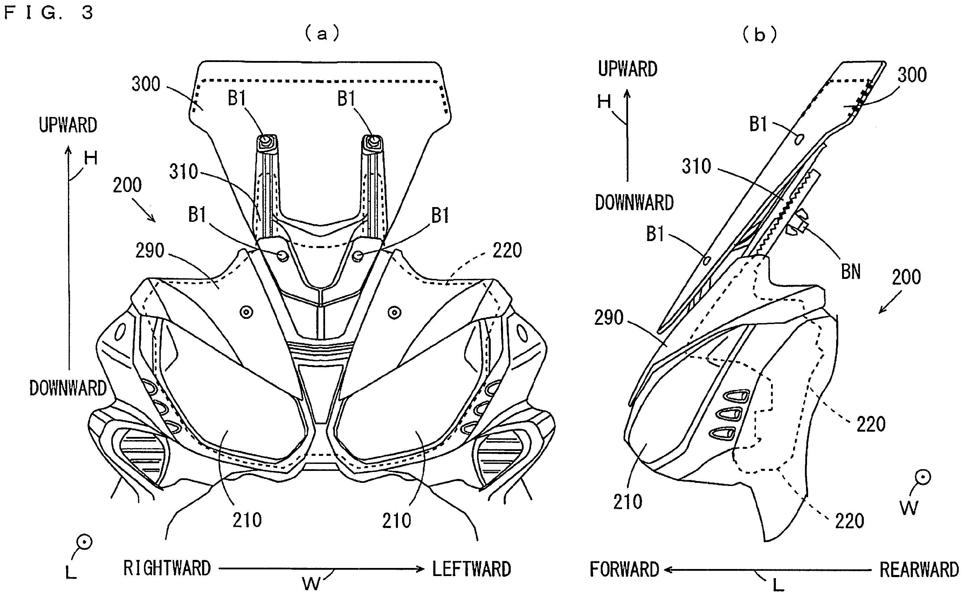

Fig. 3(a) is an enlarged front view of the upper portion of the front end of the motorcycle 100 with the position of the windscreen 300 changed to a position higher than the position of Figs. 2(a) and 2(b). Fig. 3(b) is an enlarged side view of the upper portion of the front end of the motorcycle 100 with the position of the windscreen 300 changed to the position higher than the position of Figs. 2(a) and 2(b). In each of Figs. 3(a) and 3(b), the position of the upper end of the windscreen 300 shown in each of Figs. 2(a) and 2(b) is indicated by a thick dotted line.

A mechanism for adjusting the height of the windscreen 300 is realized by the headlamp stay 220, the windscreen 300, the screen stay 310, and a plurality of members that connect these to one another. Details of the headlamp stay 220, the windscreen 300 and the screen stay 310 will be described below.

### (3) Headlamp Stay

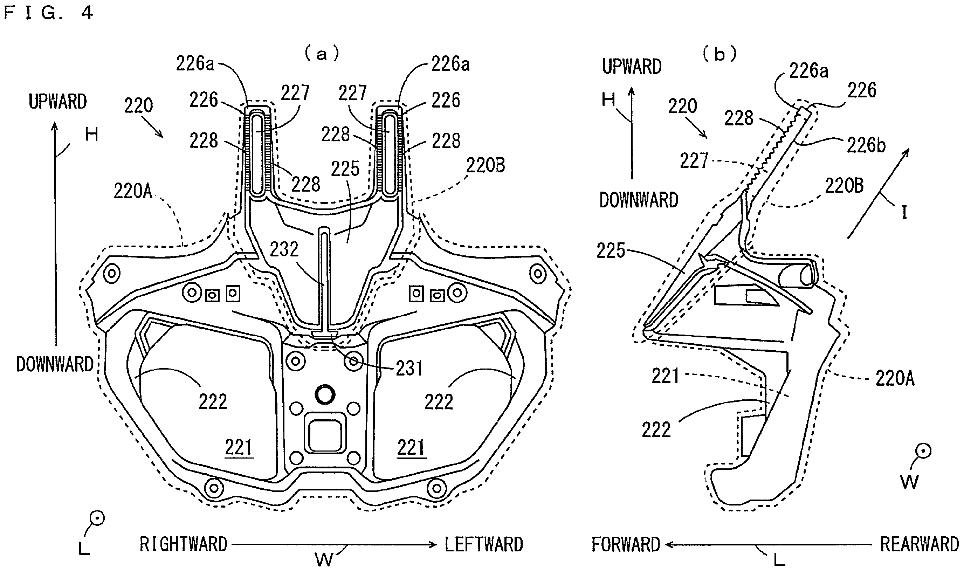

Fig. 4(a) is a front view of the headlamp stay 220, and Fig. 4(b) is a side view of the headlamp stay 220. The headlamp stay 220 is fabricated by integral formation of resin, for example.

As shown in Figs. 4(a) and 4(b), the headlamp stay 220 includes a lamp stay main portion 220A and a screen supporter 220B. When the motorcycle 100 is assembled, the rear end of the lamp stay main portion 220A is fixed to the head pipe 1 (Fig. 1). A pair of openings 221 arranged in the left-and-right direction W is formed in the lamp stay main portion 220A. A pair of lamp supporters 222 is formed to respectively surround the pair of openings 221. Respective parts of the pair of headlamps 210 (Figs. 2(a) and 2(b)) are inserted into the pair of openings 221. The pair of headlamps 210 inserted into the pair of openings 221 is respectively supported by the pair of lamp supporters 222.

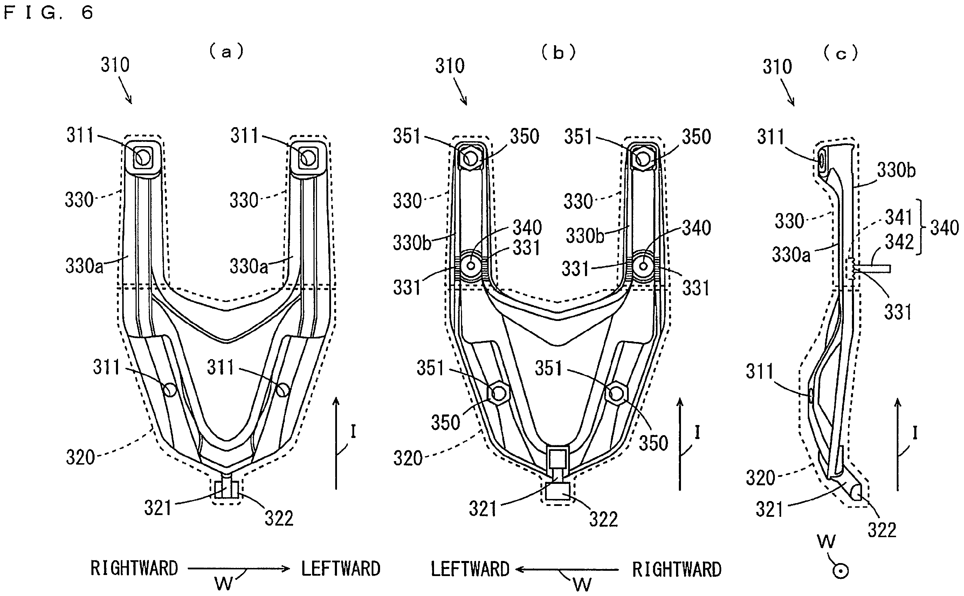

A screen supporter 220B includes a planar supporter 225 and a pair of left and right support poles 226. The planar supporter 225 is formed to extend upward and rearward and widen in the left-and-right direction W from a center portion of the lamp stay main portion 220A. A long hole 231 extending a constant length in the left-and-right direction W is formed in the vicinity of the lower end of the planar supporter 225. The length of the long hole 231 in the left-and-right direction W is larger than a measurement of a stopper 322 (Fig. 6(b)), described below, in the left-and-right direction W.

Further, a slit-shape opening 232 is formed at a center portion of the planar supporter 225 to extend upward and rearward from the center portion of the long hole 231. The slit-shape opening 232 has a constant opening width (the width in the left-and-right direction W). The opening width of the slit-shape opening 232 is larger than a maximum width of a cross section orthogonal to an axis direction of a guide shaft 321 (Fig. 6(b)), described below, and smaller than a measurement of a stopper 322 (Fig. 6(b)), described below, in the left-and-right direction W.

The pair of left and right support poles 226 is formed to further extend upward and rearward from both ends in the left-and-right direction W of the upper end of the planar supporter 225. In each of Figs. 4(b), and Figs. 5(a) to 11, described below, a direction in which the pair of support poles 226 extends is indicated by an arrow as an inclined direction I.

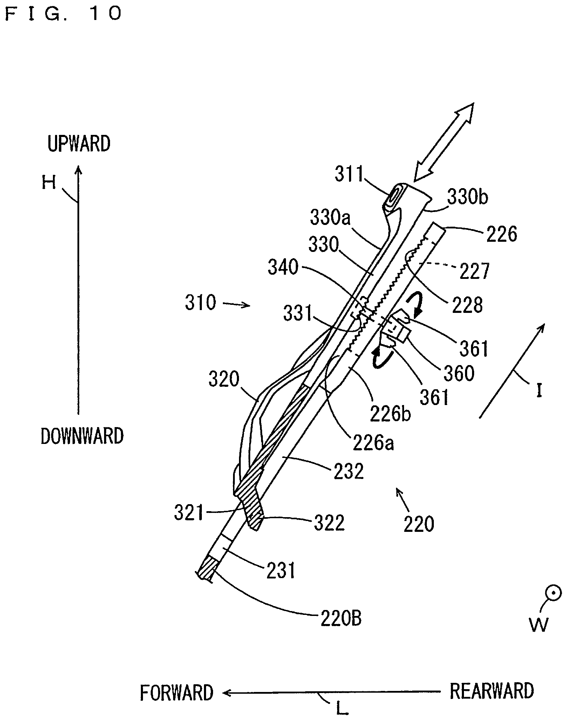

Each support pole 226 has a surface portion 226a directed forward and upward, and a back surface portion 226b directed rearward and downward. A slit-shape opening 227 that extends in the inclined direction I and penetrates the support pole 226 in the front-and-rear direction L is formed in the support pole 226. The slit-shape opening 227 has a constant opening width (the width in the left-and-right direction W). The opening width of the slit-shape opening 227 is larger than a diameter of a screw portion of an adjustment bolt 340 (Fig. 6(b)), described below, and smaller than an outer diameter of a screw portion of an adjustment nut 360 (Fig. 10), described below.

As described above, the plurality (three in the present example) of slit-shape openings 232, 227 extending in the inclined direction I are formed in the headlamp stay 220. The positions of the plurality of slit-shape openings 232, 227 in the left-and-right direction W are different from one another. The pair of slit-shape openings 227 formed in the pair of support poles 226 among the plurality of slit-shape openings 232, 227 is arranged in the left-and-right direction W. The screw portions of the adjustment bolt 340 (Fig. 10), described below, are inserted into the pair of slit-shape openings 227.

Recess-convex groups 228 are formed along both lateral sides of each slit-shape opening 227 at the surface portion 226a of each support pole 226. Each recess-convex group 228 alternately includes a plurality of recess portions and a plurality of convex portions arranged in the inclined direction I. The plurality of recess portions of the recess-convex group 228 are arranged in the inclined direction I at a constant pitch. The plurality of convex portions of the recess-convex group 228 are arranged in the inclined direction I at the same constant pitch as that of the plurality of recess portions. The pitch is set smaller than a diameter of a bolt hole 351 (Fig. 6(b)) of a nut 350 (Fig. 6(b)), described below. In the recess-convex group 228 of the present example, a longitudinal cross section in parallel with the inclined direction I has a sawtooth shape.

### (4) Windscreen

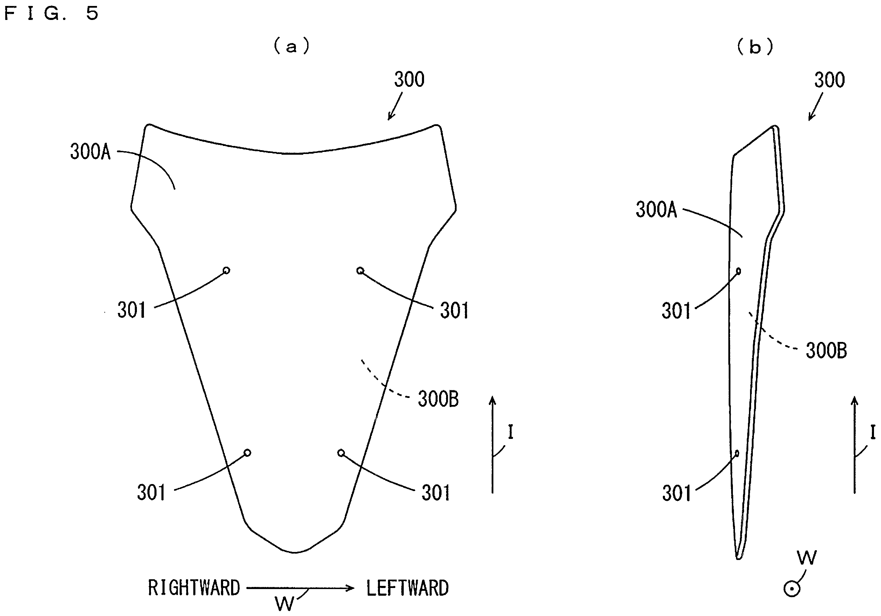

Figs. 5(a) and 5(b) are a plan view and a side view of the windscreen 300. The windscreen 300 is constituted by a plate member made of a transparent resin, for example. As shown in Figs. 5(a) and 5(b), a plurality (four in the present example) of through holes 301 for fixing the screen stay 310 of Figs. 2(a) and 2(b) to the screen back surface 300B are formed in the windscreen 300.

### (5) Screen Stay

Fig. 6(a) is a plan view of the screen stay 310, Fig. 6(b) is a bottom view of the screen stay 310, and Fig. 6(c) is a side view of the screen stay 310. The screen stay 310 is fabricated by integral formation of resin, for example. The screen stay 310 has an area and a volume smaller than those of the headlamp stay 220.

As shown in Figs. 6(a) and 6(b), the screen stay 310 has substantially the same outer shape as that of the screen supporter 220B of the headlamp stay 220 (Figs. 4(a) and 4(b)). The screen stay 310 includes a main portion 320 and a pair of left and right extension portions 330. The main portion 320 is formed to widen in the left-and-right direction W from the lower end towards the upper end. The pair of extension portions 330 are formed in parallel with the inclined direction I to further extend upward and rearward from both ends in the left-and-right direction W of the upper end portion of the main portion 320. The main portion 320 corresponds to the planar supporter 225 of the headlamp stay 220 (Figs. 4(a) and 4(b)), and the pair of extension portions 330 respectively correspond to the pair of support poles 226 of the headlamp stay 220 (Figs. 4(a) and 4(b)).

A plurality (four in the present example) of through holes 311 respectively corresponding to the plurality (four in the present example) of through holes 301 of the windscreen 300 of Figs. 5(a) and 5(b) are formed. In the present example, two through holes 311 are formed in the main portion 320, and a through hole 311 is formed in each of the pair of extension portions 330. Nuts 350 are respectively integrally fixed to portions respectively surrounding the plurality of through holes 311 of the screen stay 310 as shown in Fig. 6(b). A bolt hole 351 of each nut 350 is positioned to overlap with each through hole 311.

When the screen stay 310 is fixed to the windscreen 300 of Figs. 5(a) and 5(b), the screen stay 310 and the windscreen 300 are positioned such that each through hole 311 and each through hole 301 (Figs. 5(a) and 5(b)) corresponding to each other overlap with each other. Thereafter, a bolt B1 (Figs. 2(a) and 2(b)) is attached to each bolt hole 351 of each nut 350 (Fig. 6(b)) through the through holes 301, 311 overlapping with each other. Thus, the screen stay 310 is fixed to the windscreen 300.

The plurality of nuts 350 do not have to be fixed in advance to the screen stay 310. In this case, the plurality of nuts 350 are respectively attached to the plurality of bolts B1 that penetrate the plurality of through holes 301 of the windscreen 300 and the plurality of through holes 311 of the screen stay 310.

As shown in Figs. 6(b) and 6(c), each of the pair of extension portions 330 of the screen stay 310 has a surface portion 330a directed forward and upward and a back surface portion 330b directed rearward and downward. The adjustment bolt 340 is integrally fixed to each extension portion 330. Each adjustment bolt 340 includes a head portion 341 and a screw portion 342. The head portion 341 of the adjustment bolt 340 is embedded into the extension portion 330. The screw portion of the adjustment bolt 340 projects from the back surface portion 330b.

Fitting portions 331 are respectively formed at both left and right sides of the adjustment bolt 340 at the back surface portion 330b of each extension portion 330. Each fitting portion 331 basically has the same configuration as that of the recess-convex group 228 (Figs. 4(a) and 4(b)) except for having the different number of the recess portions and the convex portions, and can be fitted with the recess-convex group 228 of the headlamp stay 220 (Figs. 4(a) and 4(b)). While the number of the recess portions and the convex portions of the fitting portion 331 of the present example is smaller than the number of the recess portions and the convex portions of each recess-convex group 228 (Figs. 4(a) and 4(b)), the number of the recess portions and the convex portions of the fitting portion 331 may be the number of the recess portions and the convex portions of the recess-convex group 228 (Figs. 4(a) and 4(b)) or more.

The guide shaft 321 is provided at a center of a lower end portion of the main portion 320 to project downward. The stopper 322 that is orthogonal to the guide shaft 321 and extends in the left-and-right direction W is provided at a tip end of the guide shaft 321.

### (6) Attachment and Adjustment of Screen Stay to Headlamp Stay

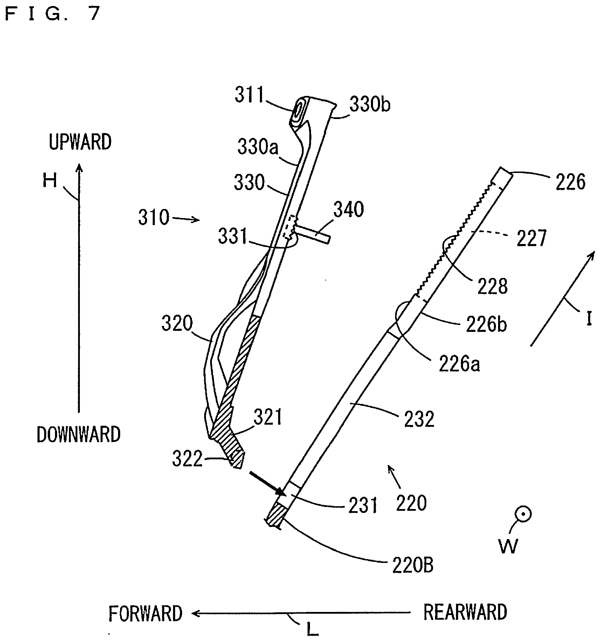

Figs. 7 to 11 are partial cutaway side views showing the attachment work and the adjustment work of the screen stay 310 to the headlamp stay 220. Figs. 7 to 11 shows side sections and cross sections of the headlamp stay 220 and the screen stay 310 as viewed from the line Q-Q of Fig. 2(a). In each of Figs. 7 to 11, the windscreen 300 is not shown.

As shown in Fig. 7, the back surface portion 330b of the screen stay 310 faces the surface portion 226a of the headlamp stay 220. As indicated by a thick solid arrow, the stopper 322 of the screen stay 310 is inserted into the long hole 231 of the headlamp stay 220. Thereafter, with the stopper 322 of the screen stay 310 located at a position further rearward than the screen supporter 220B, the guide shaft 321 of the screen stay 310 is moved into the slit-shape opening 232 as indicated by a thick solid arrow in Fig. 8.

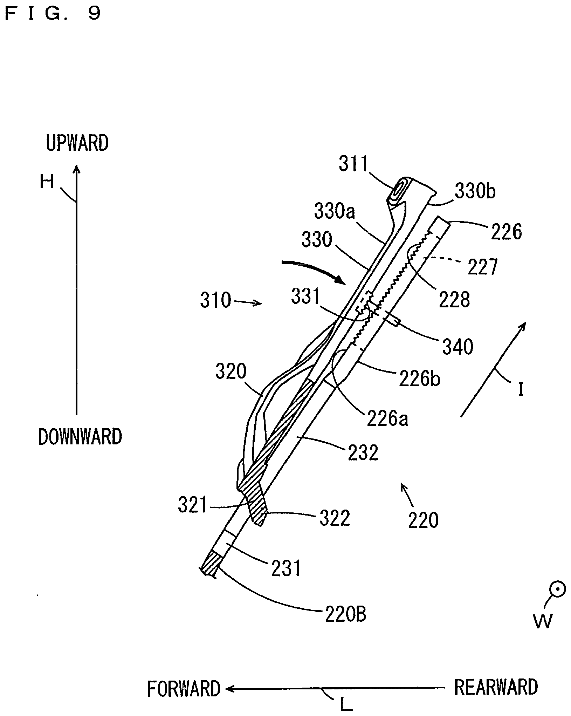

Subsequently, as indicated by a thick solid arrow in Fig. 9, the pair of adjustment bolts 340 (Fig. 6(b)) fixed to the screen stay 310 are respectively inserted into the pair of slit-shape openings 227 (Fig. 4(a)) of the headlamp stay 220. Thus, tip ends of the screw portions of the pair of adjustment bolts 340 project rearward of the support poles 226. Further, a large portion of the screen supporter 220B of the headlamp stay 220 is covered by the screen stay 310 from the front.

Next, as indicated by thick solid arrows in Fig. 10, a pair of adjustment nuts 360 are respectively attached to the tip ends of the pair of adjustment bolts 340 that project rearward of the pair of support poles 226. Each adjustment nut 360 of the present example is a wing nut, and has a plurality of wings 361. Thus, a user can adjust a level of fastening of the adjustment nut 360 while gripping the plurality of wings 361.

In the case where the height of the windscreen 300 that has once been fixed is adjusted, the position of the screen stay 310 with respect to the headlamp stay 220 is adjusted. In this case, the user loosens the adjustment nut 360, and temporarily fixes the adjustment nut 360. The temporarily fixed state of the present example refers to a state where the fastening of the adjustment nut 360 is loosened to a level where the adjustment nut 360 does not disengage from the adjustment bolt 340. Thus, the user can disengage the fitting portion 331 of the screen stay 310 from the recess-convex group 228 of the headlamp stay 220. At this time, the fitting portion 331 of the screen stay 310 and the recess-convex group 228 of the headlamp stay 220 are opposite to each other, and are spaced apart from each other.

The adjustment bolt 340 is guided to be movable in the inclined direction I in the slit-shape opening 227. Further, the guide shaft 321 is guided to be movable in the inclined direction I in the slit-shape opening 232. Therefore, as indicated by an outlined arrow in Fig. 10, the user can smoothly move the screen stay 310 in the inclined direction I with respect to the headlamp stay 220 together with the windscreen 300.

At this time, a movement range of the adjustment bolt 340 in the inclined direction I is limited to an opening length (an opening measurement in the inclined direction I) of the slit-shape opening 227, and a movement range of the adjustment bolt 340 in the left-and-right direction W is limited to the opening width of the slit-shape opening 227. The opening width of the slit-shape opening 227 is smaller than the opening length of the slit-shape opening 227. Further, a movement range of the guide shaft 321 in the inclined direction I is limited to an opening length (an opening measurement in the inclined direction I) of the slit-shape opening 232, and a movement range of the guide shaft 321 in the left-and-right direction W is limited to the opening width of the slit-shape opening 232. The opening width of the slit-shape opening 232 is smaller than the opening length of the slit-shape opening 232. Thus, during the adjustment of the height of the windscreen 300, swinging of the windscreen 300 to the left and right is prevented. Therefore, a load applied to the screen stay 310, the headlamp stay 220 and the like is reduced, and durability of each constituent element is improved.

Further, with the adjustment bolt 340 inserted into the slit-shape opening 227, the adjustment nut 360 is positioned rearward of the headlamp stay 220. In this case, a movement range of the adjustment nut 360 in the front-and-rear direction L is limited to a range smaller than the length of the adjustment bolt 340. The length of the adjustment bolt 340 is smaller than the opening length of the slit-shape opening 232. Further, with the guide shaft 321 of the screen stay 310 being inserted into the slit-shape opening 232, the stopper 322 is positioned rearward of the headlamp stay 220. In this case, a movement range of the stopper 322 in the front-and-rear direction L is limited to a range smaller than the length of the guide shaft 321. The length of the guide shaft 321 is smaller than the opening length of the slit-shape opening 232. Thus, when the screen stay 310 is moved with respect to the headlamp stay 220, swinging of the windscreen 300 to the front and rear is prevented. Further, the adjustment nut 360 is prevented from slipping out of the slit-shape opening 227 in a forward direction, and the guide shaft 321 is prevented from slipping out of the slit-shape opening 232 in the forward direction. Therefore, the screen stay 310 is prevented from being detached from the headlamp stay 220.

The user fits the fitting portion 331 with the recess-convex group 228 at a desired position while keeping the windscreen 300 at a desired height. Thus, the user can easily position the screen stay 310 with respect to the headlamp stay 220.

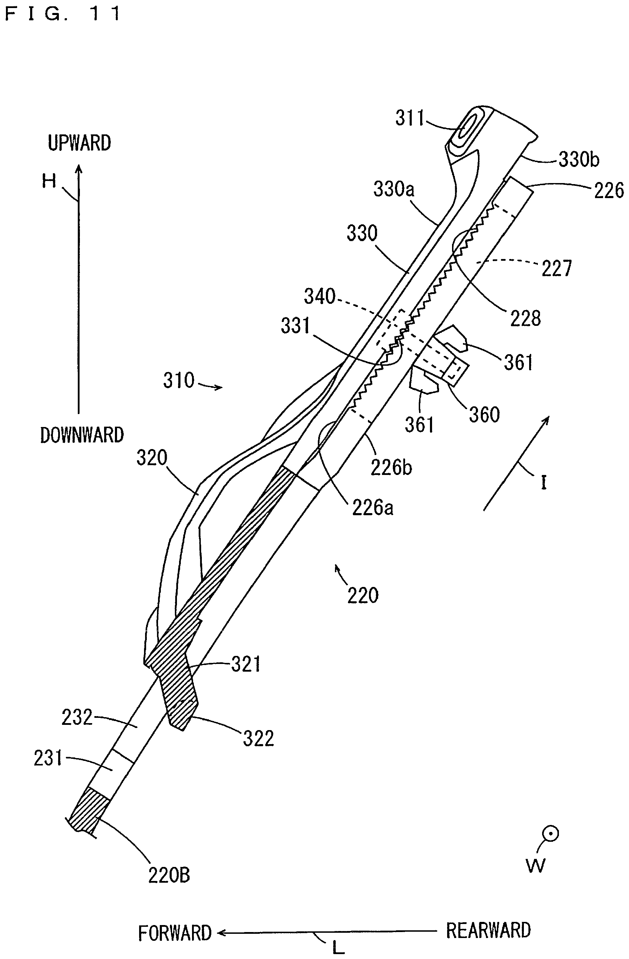

When the user fastens the temporarily fixed adjustment nut 360, the screen stay 310 is fixed to the headlamp stay 220 with the fitting portion 331 fitted with the recess-convex group 228 as shown in Fig. 11.

The user may disengage the adjustment nut 360 from the adjustment bolt 340 in disengaging the fitting portion 331 from the recess-convex group 228, adjust the height of the windscreen 300, fit the fitting portion 331 with the recess-convex group 228, then attach the adjustment nut 360 to the adjustment bolt 340, and fasten the adjustment nut 360.

A movable range of the screen stay 310 in the inclined direction I in the case where the height of the windscreen 300 is adjusted is defined by the positions and the opening lengths of the plurality of slit-shape openings 227, 232. Therefore, the positions and the opening lengths of the plurality of slit-shape openings 227, 232 are set according to a position and a posture of the rider who sits on the seat 8.

A movable range of the screen stay 310 in the left-and-right direction W in the case where the height of the windscreen 300 is adjusted is defined by the positions and the opening widths of the plurality of slit-shape openings 227, 232. Therefore, the positions and the opening widths of the plurality of slit-shape openings 227, 232 are set to a level where the movement of the screen stay 310 in the inclined direction I with respect to the headlamp stay 220 is not prevented.

Further, a movable range of the substantially center portion of the screen stay 310 in the front-and-rear direction in the case where the height of the windscreen 300 is adjusted is defined by the thickness of the support pole 226 and the length of the adjustment bolt 340. Further, a movable range of a lower end portion of the screen stay 310 in the front-and-rear direction L in the case where the height of the windscreen 300 is adjusted is defined by the thickness of the screen supporter 220B and the length of the guide shaft 321. Therefore, the thickness of the screen supporter 220B and the length of the guide shaft 321 are set to a level where the movement of the screen stay 310 in the inclined direction I with respect to the headlamp stay 220 is not prevented.

### (7) Positional Relationship between Adjustment Nut and Meter Unit

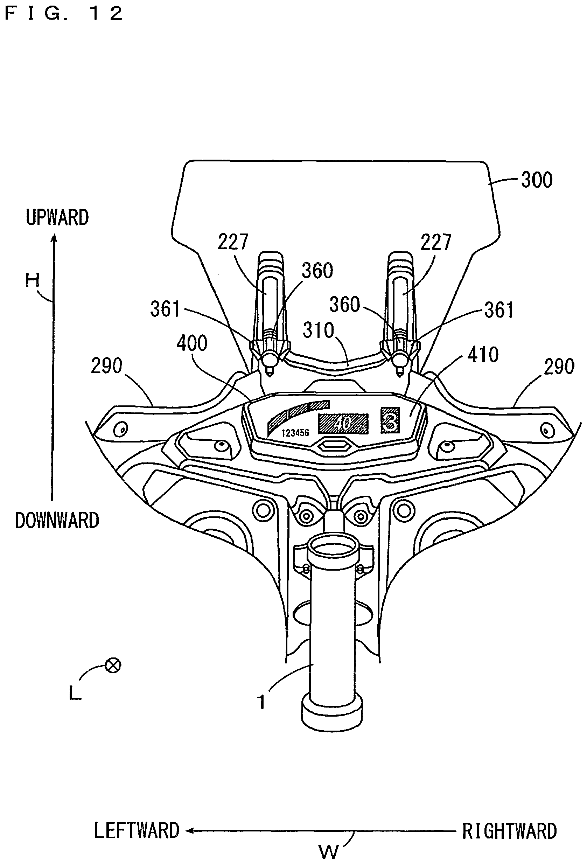

Fig. 12 is mainly an appearance of the windscreen 300 and the meter unit 400 of Fig. 1 as viewed from behind the head pipe 1. In Fig. 12, the front fork 4, the handle 5 and the like of Fig. 1 are not shown.

As shown in Fig. 12, the meter unit 400 is provided at a position further forward than the head pipe 1 and further rearward than the windscreen 300 such that the rider can view the display 410. The pair of adjustment nuts 360 is provided at a position rearward of the windscreen 300 and further upward than the display 410 of the meter unit 400. Thus, the rider can easily operate the wings 361 of the adjustment nuts 360 while riding the motorcycle 100.

### (8) Effects

In the above-mentioned motorcycle 100, the user does not need to perform an operation of detaching the windscreen 300 from the screen stay 310 or the headlamp stay 220 and attaching them again in adjusting the height of the windscreen 300. Further, it is not necessary to use an actuator in order to adjust the height of the windscreen 300. Therefore, the height of the windscreen 300 can be adjusted to a desired height with a simple configuration, by a simple operation and at low cost.

Further, in the above-mentioned configuration, the user can change a holding state of the screen stay 310 between a state where the screen stay 310 is fixed to the headlamp stay 220 and a state where the screen stay 310 is movable with respect to the headlamp stay 220 according to a fastening level of the adjustment nut 360 to the adjustment bolt 340. Therefore, the user can switch the holding state of the screen stay 310 with respect to the headlamp stay 220 by a simple operation.

Further, in the above-mentioned configuration, the screen stay 310 is guided in the inclined direction I with respect to the headlamp stay 220 by the insertion of the adjustment boit 340 into the slit-shape opening 227. Therefore, a mechanism for guiding the windscreen 300 in the inclined direction I with a simple configuration is realized. Further, the adjustment bolt 340 serves as a component for holding the screen stay 310 at the headlamp stay 220 and a component for guiding the screen stay 310 with respect to the headlamp stay 220. Thus, the number of members is reduced.

A pitch of the plurality of recess portions and a pitch of the plurality of convex portions of the recess-convex group 228 formed at the headlamp stay 220 are set smaller than a diameter of the bolt hole 351 of the nut 350 provided at the screen stay 310. Thus, the height of the windscreen 300 can be finely adjusted.

The screen stay 310 has an area and a volume smaller than those of the headlamp stay 220. In this case, the screen stay 310 having small area and volume moves with respect to the headlamp stay 220 having large area and volume. Thus, an increase in size of the motorcycle 100 can be inhibited.

In the present embodiment, the headlamp stay 220 that supports the headlamp 210 has a function of supporting the windscreen 300. That is, the headlamp stay 220 serves as a support member for the headlamp 210 and a support member for the windscreen 300. Therefore, the number of members of the motorcycle 100 is reduced, and a decrease in size of the motorcycle 100 is realized.

### (9) Other Embodiments

(9-1) In the above-mentioned embodiment, the recess-convex groups 228 are formed at each support pole 226 of the headlamp stay 220, and the fitting portions 331 are formed at each extension portion 330 of the screen stay 310. However, the present invention is not limited to this. The fitting portions 331 may be formed at each support pole 226 of the headlamp stay 220, and the recess-convex groups 228 may be formed at each extension portion 330 of the screen stay 310.
(9-2) In the above-mentioned embodiment, the slit-shape opening 227 is formed in each support pole 226 of the headlamp stay 220, and each adjustment bolt 340 fixed to the screen stay 310 is inserted into the slit-shape opening 227. However, the present invention is not limited to this. The slit-shape opening 227 may be formed in each extension portion 330 of the screen stay 310, and the adjustment bolt 340 may be provided at each support pole 226 of the headlamp stay 220.
(9-3) While the adjustment bolt 340 is fixed to each extension portion 330 of the screen stay 310 in the above-mentioned embodiment, the present invention is not limited to this. The adjustment nut 360 may be fixed to each extension portion 330 of the screen stay 310. In this case, the adjustment bolt 340 is attached to the adjustment nut 360 through the slit-shape opening 227 from a position rearward of each support pole 226 of the headlamp stay 220, for example. Thus, the screen stay 310 can be fixed to the headlamp stay 220.
(9-4) In the above-mentioned embodiment, the slit-shape opening 232 is formed in the headlamp stay 220, and the guide shaft 321 is provided at the lower end of the screen stay 310. However, the present invention is not limited to this. The guide shaft 321 may be provided at the headlamp stay 220, and the slit-shape opening 232 may be formed in the screen stay 310. In this case, with the guide shaft 321 of the headlamp stay 220 inserted into the slit-shape opening 232, the guide shaft 321 is guided in a direction in which the slit-shape opening 232 extends. Further, the stopper 322 is positioned forward of the screen stay 310, so that the screen stay 310 is prevented from being detached from the headlamp stay 220.
(9-5) While a wing nut having the plurality of wings 361 is used as the adjustment nut 360 for fixing the screen stay 310 to the headlamp stay 220 in the above-mentioned embodiment, the present invention is not limited to this. A nut not having the plurality of wings 361 may be used as the adjustment nut 360.
(9-6) While each recess portion and each convex portion of the recess-convex group 228 have a triangle longitudinal cross section in the above-mentioned embodiment, the present invention is not limited to this. Each recess portion and each convex portion of the recess-convex group 228 may have another cross sectional shape such as a rectangle or a semicircle, and adjacent recess portion and convex portion may be spaced apart from each other.
(9-7) While the screen supporter 220B including the recess-convex groups 228 is integrally formed with the lamp stay main portion 220A as part of the headlamp stay 220 in the above-mentioned embodiment, the present invention is not limited to this. The screen supporter 220B may be formed separately from the lamp stay main portion 220A. In this case, the screen supporter 220B may be connected to the lamp stay main portion 220A, or may be connected to the vehicle main body except for the lamp stay main portion 220A, that is, for example, the head pipe 1, the main frame 2, the sub-frame 3 or the like.
(9-8) In the above-mentioned embodiment, the screen stay 310 including the fitting portions 331 is formed separately from the windscreen 300, and the screen stay 310 is fixed to the windscreen 300 by the use of the plurality of bolts B1. However, the present invention is not limited to this. The screen stay 310 and the windscreen 300 may be integrally formed. In this case, the attachment work of the screen stay 310 to the windscreen 300 is unnecessary, and the number of members is reduced.
(9-9) While the above-mentioned embodiment is an example in which the present invention is applied to the motorcycle, the invention is not limited to this. The present invention may be applied to another straddled vehicle such as a motor tricycle, an ATV (All Terrain Vehicle) or the like.

### (10) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 1, the main frame 2 and the sub-frame 3 are examples of a body frame, the windscreen 300 is an example of a windscreen, the headlamp stay 220, the screen stay 310, the adjustment bolt 340, the nut 350 and the adjustment nut 360 are examples of a screen support mechanism, the headlamp stay 220 is an example of a first element and a headlamp supporter, the screen stay 310 and the nut 350 are examples of a second element.

Further, the adjustment bolt 340 and the adjustment nut 360 are examples of a holding element, the state where the adjustment nut 360 is fastened to the adjustment bolt 340 is an example of a first state, the state where the adjustment nut 360 is temporarily fixed to the adjustment bolt 340 inserted into the slit-shape opening 227 and the state where the adjustment nut 360 is disengaged from the adjustment bolt 340 inserted into the slit-shape opening 227 are examples of a second state, the inclined direction I is an example of a first direction, the recess-convex group 228 is an example of a recess-convex group, the fitting portion 331 is an example of a fitting portion, and the motorcycle 100 is an example of a straddled vehicle.

Further, the bolt hole 351 is an example of a bolt hole, the bolt B1 is an example of a first bolt, the pair of slit-shape openings 227 of the headlamp stay 220, the adjustment bolt 340, the adjustment nut 360, the slit-shape opening 232 of the headlamp stay 220, and the guide shaft 321 and the stopper 322 of the screen stay 310 are examples of a guide portion, and the direction orthogonal to the inclined direction I and the left-and-right direction W are examples of a second direction.

Further, a smaller range of the range in which the adjustment bolt 340 is movable in the inclined direction I in the slit-shape opening 227 and the range in which the guide shaft 321 is movable in the inclined direction I in the slit-shape opening 232 is an example of a first range, a smaller range of the range in which the adjustment bolt 340 is movable in the left-and-right direction W in the slit-shape opening 227 and the range in which the guide shaft 321 is movable in the left-and-right direction W in the slit-shape opening 232 is an example of a second range.

Further, the slit-shape opening 232 and the pair of slit-shape openings 227 are examples of an engaging portion and a slit-shape opening, the guide shaft 321 and the stopper 322 of the screen stay 310, and the pair of adjustment bolts 340 and the pair of adjustment nuts 360 are examples of an engaged portion, the range in which the guide shaft 321 and the pair of adjustment bolts 340 are movable in the front-and-rear direction L is an example of a third range.

Further, the guide shaft 321 and the screw portions 342 of the pair of adjustment bolts 340 are examples of a guide shaft, the stopper 322, and the pair of adjustment nuts 360 or the head portions 341 of the pair of adjustment bolts 340 are examples of a stopper, the screw portions 342 of the pair of adjustment bolts 340 are examples of a portion of a second bolt except for a head portion, the head portions 341 of the pair of adjustment bolts 340 are examples of a head portion of a second bolt, the pair of adjustment bolts 340 is an example of a second bolt and a fixed fastening member, the pair of adjustment nuts 360 is an example of a nut and a movable fastening member, the plurality of wings 361 of the pair of adjustment nuts 360 are examples of a gripper, the meter unit 400 is an example of a display device, and the pair of headlamps 210 is an example of a headlamp.

### INDUSTRIAL APPLICABILITY

The present invention can be effectively utilized for vehicles.

## Claims

1. A straddled vehicle comprising:
a vehicle main body that includes a body frame (1, 2, 3);
a windscreen (300); and
a screen support mechanism that supports the windscreen (300) at the vehicle main body such that a height of the windscreen (300) is adjustable, wherein
the screen support mechanism includes
a first element (220) fixed to the vehicle main body (1, 2, 3),
a second element (310) fixed to the windscreen (300), and
a holding element (340, 360) changeable between a first state where the holding element (340, 360) fixes the first element (220) and the second element (310) to each other and a second state where the holding element (340, 360) holds the second element (310) to be movable with respect to the first element (220),
one of the first and second elements (220, 310) has a recess-convex group (228) alternately including a plurality of recess portions and a plurality of convex portions arranged in a first direction (I), and the first direction (I) is a top-and-bottom direction (H) in a vehicle front view,
another one of the first and second elements (220, 310) has a fitting portion (331) that includes at least one convex portion or recess portion that can be fitted with the recess-convex group (228), and
the second element (310) is fixed to the first element (220) when the fitting portion (331) is fitted with the recess-convex group (228), and the holding element (340, 360) is in the first state, and movable in the first direction (I) with respect to the first element (220) when the fitting portion (331) is not fitted with the recess-convex group (228), and the holding element (340, 360) is in the second state,
**characterized by** that the first element (220) further has a planar supporter (225) and a pair of left and right support poles (226), the planar supporter (225) being formed to extend upward and rearward and widen in the left-and-right direction (W) and comprises a long hole (231), the pair of left and right support poles (226) being provided to extend in the first direction (I) from the planar supporter (225), the second element (310) further has a main portion (320) corresponding to the planar supporter (225) and a pair of left and right extension portions (330) corresponding to the pair of support poles (226), and
the planar supporter (225) and the pair of support poles (226) support the main portion (320) and the pair of extension portions (330), respectively when the holding element (340, 360) is in the first state.

2. The straddled vehicle according to claim 1, wherein
the second element (310) has bolt holes (351),
the windscreen (300) and the second element (310) are fixed to each other by bolts (B1) passing through the bolt holes (351), and
the plurality of recess portions of the recess-convex group (228) are arranged at a pitch smaller than a diameter of the bolt hole (351).

3. The straddled vehicle according to claim 1 or 2, further comprising a guide portion that guides the second element (310) to be movable in the first direction (I) with respect to the first element (220), wherein
the guide portion, when the holding element (340, 360) is in the second state, is configured to limit a movement range of the second element (310) in the first direction (I) with respect to the first element (220) to a first range, and limit a movement range of the second element (310) in a second direction (W) orthogonal to the first direction (I) with respect to the first element (220) to a second range smaller than the first range.

4. The straddled vehicle according to claim 3, wherein
the guide portion includes
an engaging portion (232, 227) provided at one of the first and second elements (220, 310) to extend in the first direction (I), and
an engaged portion (321, 322, 340, 360) provided at another one of the first and second elements (220, 310) to be engaged with the engaging portion (232, 227), and
the engaging portion (232, 227) is configured to guide the engaged portion (321, 322, 340, 360) to be movable in the first direction (I), limit a movement range of the engaged portion (321, 322, 340, 360) in the first direction (I) to the first range, and limit a movement range of the engaged portion (321, 322, 340, 360) in a vehicle left-and-right direction (W) to the second range.

5. The straddled vehicle according to claim 4, wherein
the engaging portion (232, 227) includes a slit-shape opening (232) extending in the first direction (I), and
the engaged portion (321, 322, 340, 360) includes a guide shaft (321) inserted into the slit-shape opening (232).

6. The straddled vehicle according to claim 4, wherein
the engaging portion (232, 227) is configured to limit a movement range of the engaged portion (321, 322, 340, 360) in a vehicle front-and-rear direction (L) to a third range smaller than the first range.

7. The straddled vehicle according to claim 6, wherein
the engaging portion (232, 227) includes a slit-shape opening (232) extending in the first direction (I), and
the engaged portion (321, 322, 340, 360) includes
a guide shaft (321) inserted into the slit-shape opening (232), and
a stopper (322) provided at a tip end of the guide shaft (321), and
a measurement of the stopper (322) in the vehicle left-and-right direction (W) is larger than a width of the slit-shape opening (232) in the vehicle left-and-right direction (W) .

8. The straddled vehicle according to claim 7, wherein
the holding element (340, 360) includes a second bolt (340) and a nut (360),
one of the second bolt (340) and the nut (360) is a fixed fastening member fixed to the other one of the first and second elements (220, 310), and another one of the second bolt (340) and the nut (360) is a movable fastening member rotatable with respect to the fixed fastening member,
the nut (360) is attached to a screw portion (342) of the second bolt (340) that projects from the slit-shape opening (232) with the second bolt (340) inserted into the slit-shape opening (232),
the holding element (340, 360) is changeable between the first state and the second state according to a fastening level of the movable fastening member to the fixed fastening member,
the guide shaft (321) includes a portion of the second bolt (340) except for a head portion (341), and
the stopper (322) includes the nut (360) or the head portion (341) of the second bolt (340).

9. The straddled vehicle according to claim 8, wherein the movable fastening member has a gripper (361) that can be gripped by a user.

10. The straddled vehicle according to claim 9, wherein
the gripper (361) is positioned on a rear side of the windscreen (300).

11. The straddled vehicle according to claim 10, further comprising a display device (410) that displays information related to a state of the vehicle, wherein
the display device (410) is provided at a position where the display device (410) can be viewed by a rider, and
the gripper (361) is arranged at a position further upward than the display device (410).

12. The straddled vehicle according to any one of claims 1 to 11, wherein
the second element (310) has an area and a volume that are smaller than those of the first element (220).

13. The straddled vehicle according to any one of claims 1 to 12, further comprising a headlamp supporter that supports a headlamp (210) at the vehicle main body, wherein
the headlamp supporter also serves as the first element (220) .

## Patentansprüche

1. Ein Grätschsitzfahrzeug, das folgende Merkmale aufweist:
einen Fahrzeughauptkörper, der einen Körperrahmen (1, 2, 3) umfasst;
eine Windschutzscheibe (300); und
einen Scheibentragemechanismus, der die Windschutzscheibe (300) an dem Fahrzeughauptkörper trägt, so dass eine Höhe der Windschutzscheibe (300) einstellbar ist, wobei
der Scheibentragemechanismus folgende Merkmale umfasst:
ein erstes Element (220), das an dem Fahrzeughauptkörper (1, 2, 3) fixiert ist;
ein zweites Element (310), das an der Windschutzscheibe (300) fixiert ist und
ein Halteelement (340, 360), das veränderbar ist zwischen einem ersten Zustand, in dem das Halteelement (340, 360) das erste Element (220) und das zweite Element (310) aneinander fixiert, und einem zweiten Zustand, in dem das Halteelement (340, 360) das zweite Element (310) hält, so dass dasselbe in Bezug auf das erste Element (220) bewegbar ist,
eines des ersten und des zweiten Elements (220, 310) eine Ausnehmung-Konvex-Gruppe (228) aufweist, die abwechselnd eine Mehrzahl von Ausnehmungsabschnitten und eine Mehrzahl von konvexen Abschnitten umfasst, die in einer ersten Richtung (I) angeordnet sind, und die erste Richtung (I) in einer Fahrzeugvorderansicht eine Richtung von oben nach unten (H) ist;
ein anderes des ersten und des zweiten Elements (220, 310) einen Einpassabschnitt (331) aufweist, der zumindest einen konvexen Abschnitt oder Ausnehmungsabschnitt umfasst, der mit der Ausnehmung-Konvex-Gruppe (228) versehen sein kann und
das zweite Element (310) an dem ersten Element (220) fixiert ist, wenn der Einpassabschnitt (331) mit der Ausnehmung-Konvex-Gruppe (228) versehen ist, und das Halteelement (340, 360) in dem ersten Zustand ist und in Bezug auf das erste Element (220) in der ersten Richtung (I) bewegbar ist, wenn der Einpassabschnitt (331) nicht mit der Ausnehmung-Konvex-Gruppe (280) versehen ist, und das Halteelement (340, 360) in dem zweiten Zustand ist,
**dadurch gekennzeichnet, dass** das erste Element (220) ferner einen planaren Träger (225) und ein Paar von linken und rechten Tragestangen (226) aufweist, wobei der planare Träger (225) gebildet ist, um sich nach oben und hinten zu erstrecken und in der Richtung von links nach rechts (W) zu verbreitern und ein langes Loch (231) aufweist, wobei das Paar von linken und rechten Tragestangen (226) vorgesehen ist, damit sich dasselbe von dem planaren Träger (225) in der ersten Richtung (I) erstreckt, wobei das zweite Element (310) ferner einen Hauptabschnitt (320), der dem planaren Träger (225) entspricht, und ein Paar von linken und rechten Verlängerungsabschnitten (330) aufweist, das dem Paar von Tragestangen (226) entspricht und
der planare Träger (225) und das Paar von Tragestangen (226) den Hauptabschnitt (320) beziehungsweise das Paar von Verlängerungsabschnitten (330) tragen, wenn das Halteelement (340, 360) in dem ersten Zustand ist.

2. Das Grätschsitzfahrzeug gemäß Anspruch 1, bei dem
das zweite Element (310) Schraubenbolzenlöcher (341) aufweist,
die Windschutzscheibe (300) und das zweite Element (310) durch Schraubenbolzen (B1), die durch die Schraubenbolzenlöcher (351) verlaufen, aneinander fixiert sind und
die Mehrzahl von Ausnehmungsabschnitten der Ausnehmung-Konvex-Gruppe (228) an einem Abstand angeordnet sind, der kleiner ist als ein Durchmesser des Schraubenbolzenlochs (351).

3. Das Grätschsitzfahrzeug gemäß Anspruch 1 oder 2, das ferner einen Führungsabschnitt aufweist,
der das zweite Element (310) führt, so dass dasselbe in Bezug auf das erste Element (220) in der ersten Richtung (I) bewegbar ist, wobei
der Führungsabschnitt, wenn das Halteelement (340, 360) in dem zweiten Zustand ist, konfiguriert ist, einen Bewegungsbereich des zweiten Elements (310) in der ersten Richtung (I) in Bezug auf das erste Element (220) auf einen ersten Bereich zu begrenzen, und einen Bewegungsbereich des zweiten Elements (310) in einer zweiten Richtung (W) orthogonal zu der ersten Richtung (I) in Bezug auf das erste Element (220) auf einen zweiten Bereich zu begrenzen, der kleiner ist als der erste Bereich.

4. Das Grätschsitzfahrzeug gemäß Anspruch 3, bei dem der Führungsabschnitt folgende Merkmale umfasst:
einen Eingriffnahmeabschnitt (232, 227), der an einem des ersten und des zweiten Elements (220, 310) vorgesehen ist, um sich in der ersten Richtung (I) zu erstrecken und
einen in Eingriff genommenen Abschnitt (321, 322, 340, 360), der an einem anderen des ersten und des zweiten Elements (220, 310) vorgesehen ist, um mit dem Eingriffnahmeabschnitt (232, 227) in Eingriff zu sein, und
wobei der Eingriffnahmeabschnitt (232, 227) konfiguriert ist, den in Eingriff genommenen Abschnitt (321, 322, 340, 360) zu führen, so dass derselbe in der ersten Richtung (I) bewegbar ist, einen Bewegungsbereich des in Eingriff genommenen Abschnitts (321, 322, 340, 360) in der ersten Richtung (I) auf den ersten Bereich zu begrenzen und einen Bewegungsbereich des in Eingriff genommenen Abschnitts (321, 322, 340, 360) in einer Richtung des Fahrzeugs von links nach rechts (W) auf den zweiten Bereich zu begrenzen.

5. Das Grätschsitzfahrzeug gemäß Anspruch 4, bei dem
der Eingriffnahmeabschnitt (232, 227) eine schlitzförmige Öffnung (232) umfasst, die sich in der ersten Richtung (I) erstreckt und
der in Eingriff genommene Abschnitt (321, 322, 340, 360) eine Führungswelle (321) umfasst, die in die schlitzförmige Öffnung (232) eingefügt ist.

6. Das Grätschsitzfahrzeug gemäß Anspruch 4, bei dem
der Eingriffnahmeabschnitt (232, 227) konfiguriert ist, einen Bewegungsbereich des in Eingriff genommenen Abschnitts (321, 322, 340, 360) in einer Vorwärts- und Rückwärtsrichtung des Fahrzeugs (L) auf einen dritten Bereich zu begrenzen, der kleiner ist als der erste Bereich.

7. Das Grätschsitzfahrzeug gemäß Anspruch 6, bei dem
der Eingriffnahmeabschnitt (232, 227) eine schlitzförmige Öffnung (232) umfasst, die sich in der ersten Richtung (I) erstreckt und
der in Eingriff genommene Abschnitt (321, 322, 340, 360) eine Führungswelle (321) umfasst, die in die schlitzförmige Öffnung (232) eingefügt ist und
eine Anschlagvorrichtung (322) an einem spitzen Ende der Führungswelle (321) vorgesehen ist und
eine Abmessung der Anschlagvorrichtung (322) in der Richtung des Fahrzeugs von links nach rechts (W) größer ist als eine Breite der schlitzförmigen Öffnung (232) in der Richtung des Fahrzeugs von links nach rechts (W).

8. Das Grätschsitzfahrzeug gemäß Anspruch 7, bei dem
das Halteelement (340, 360) einen zweiten Schraubenbolzen (340) und eine Mutter (360) umfasst,
eines des zweiten Schraubenbolzens (340) und der Mutter (360) ein fixiertes Befestigungsbauglied ist, das an dem anderen des ersten und des zweiten Elements (220, 310) fixiert ist, und ein anderes des zweiten Schraubenbolzens (340) und der Mutter (360) ein bewegbares Befestigungsbauglied ist, das in Bezug auf das fixierte Befestigungsbauglied drehbar ist,
die Mutter (360) an einem Schraubenabschnitt (342) des zweiten Schraubenbolzens (340) angebracht ist, der von der schlitzförmigen Öffnung (232) vorsteht, mit dem zweiten Schraubenbolzen (340) eingefügt in die schlitzförmige Öffnung (232),
das Halteelement (340, 360) gemäß einem Befestigungspegel des bewegbaren Befestigungsbauglieds an dem fixierten Befestigungsbauglied zwischen dem ersten Zustand und dem zweiten Zustand veränderbar ist,
die Führungswelle (321) einen Abschnitt des zweiten Schraubenbolzens (340) außer dem Kopfabschnitt (341) umfasst und
die Anschlagvorrichtung (322) die Mutter (360) oder den Kopfabschnitt (341) des zweiten Schraubenbolzens (340) umfasst.

9. Das Grätschsitzfahrzeug gemäß Anspruch 8, bei dem
das bewegbare Befestigungsbauglied einen Greifer (361) aufweist, der von einem Nutzer gegriffen werden kann.

10. Das Grätschsitzfahrzeug gemäß Anspruch 9, bei dem
der Greifer (361) auf einer Rückseite der Windschutzscheibe (300) angeordnet ist.

11. Das Grätschsitzfahrzeug gemäß Anspruch 10, das ferner eine Anzeigevorrichtung (410) aufweist, die Informationen anzeigt, die sich auf einen Zustand des Fahrzeugs beziehen, wobei
die Anzeigevorrichtung (410) an einer Position vorgesehen ist, an der die Anzeigevorrichtung (410) durch einen Fahrer betrachtet werden kann und
der Greifer (361) an einer Position angeordnet ist, die weiter oben liegt als die Anzeigevorrichtung (410).

12. Das Grätschsitzfahrzeug gemäß einem der Ansprüche 1 bis 11, bei dem
das zweite Element (310) einen Bereich und ein Volumen aufweist, die kleiner sind als diejenigen des ersten Elements (220).

13. Das Grätschsitzfahrzeug gemäß einem der Ansprüche 1 bis 12, das ferner einen Scheinwerferträger aufweist, der einen Scheinwerfer (210) an dem Fahrzeughauptkörper trägt, wobei
der Scheinwerferträger auch als das erste Element (220) dient.

## Revendications

1. Véhicule à selle, comprenant:
un corps principal de véhicule qui comporte un châssis de carrosserie (1, 2, 3);
un pare-brise (300); et
un mécanisme de support d'écran qui supporte le pare-brise (300) au niveau du corps principal de véhicule de sorte que soit réglable une hauteur du pare-brise (300),
dans lequel
le mécanisme de support d'écran comporte
un premier élément (220) fixé au corps principal de véhicule (1, 2, 3),
un deuxième élément (310) fixé au pare-brise (300), et
un élément de maintien (340, 360) pouvant être changé entre un premier état dans lequel l'élément de maintien (340, 360) fixe le premier élément (220) et le deuxième élément (310) l'un à l'autre et un deuxième état dans lequel l'élément de maintien (340, 360) maintient le deuxième élément (310) déplaçable par rapport au premier élément (220),
l'un parmi les premier et deuxième éléments (220, 310) présente un groupe évidé-convexe (228) comportant alternativement une pluralité de parties évidées et une pluralité de parties convexes disposées dans une première direction (I), et la première direction (I) est une direction vers le haut et vers le bas (H) en vue de l'avant du véhicule,
un autre parmi les premier et deuxième éléments (220, 310) présente une partie de montage (331) qui comporte au moins une partie convexe ou une partie évidée qui peut être pourvue du groupe évidé-convexe (228), et
le deuxième élément (310) est fixé au premier élément (220) lorsque la partie de montage (331) est pourvue du groupe évidé-convexe (228) et que l'élément de maintien (340, 360) se trouve dans le premier état, et est déplaçable dans la première direction (I) par rapport au premier élément (220) lorsque la partie de montage (331) n'est pas pourvue du groupe évidé-convexe (228) et que l'élément de maintien (340, 360) se trouve dans le deuxième état,
**caractérisé par le fait que** le premier élément (220) présente par ailleurs un support plan (225) et une paire de montants de support gauche et droit (226), le support plan (225) étant formé de manière à s'étendre vers le haut et vers l'arrière et à s'élargir dans les directions à gauche et à droite (W) et comprend un long trou (231), la paire de montants de support gauche et droit (226) étant prévue de manière à s'étendre dans la première direction (I) à partir du support plan (225), le deuxième élément (310) présente par ailleurs une partie principale (320) correspondant au support plan (225) et une paire de parties d'extension gauche et droite (330) correspondant à la paire de montants de support (226), et
le support plan (225) et la paire de montants de support (226) supportent respectivement la partie principale (320) et la paire de parties d'extension (330) lorsque l'élément de maintien (340, 360) se trouve dans le premier état.

2. Véhicule à selle selon la revendication 1, dans lequel
le deuxième élément (310) présente des trous à boulon (351),
le pare-brise (300) et le deuxième élément (310) sont fixés l'un à l'autre par des boulons (B1) passant à travers les trous à boulon (351), et
la pluralité de parties évidées du groupe évidé-convexe (228) sont disposées selon un pas inférieur à un diamètre du trou à boulon (351).

3. Véhicule à selle selon la revendication 1 ou 2, comprenant par ailleurs une partie de guidage qui guide le deuxième élément (310) de manière à être déplaçable dans la première direction (I) par rapport au premier élément (220), dans lequel
la partie de guidage, lorsque l'élément de maintien (340, 360) se trouve dans le deuxième état, est configurée pour limiter une plage de déplacement du deuxième élément (310) dans la première direction (I) par rapport au premier élément (220) à une première plage, et pour limiter une plage de déplacement du deuxième élément (310) dans une deuxième direction (W) orthogonale à la première direction (I) par rapport au premier élément (220) à une deuxième plage plus petite que la première plage.

4. Véhicule à selle selon la revendication 3, dans lequel
la partie de guidage comporte
une partie de venue en prise (232, 227) prévue sur l'un des premier et deuxième éléments (220, 310) de manière à s'étendre dans la première direction (I), et
une partie entrée en prise (321, 322, 340, 360) prévue sur un autre des premier et deuxième éléments (220, 310) de manière à être en prise avec la partie de venue en prise (232, 227), et
la partie de venue en prise (232, 227) est configurée pour guider la partie entrée en prise (321, 322, 340, 360) de manière à pouvoir se déplacer dans la première direction (I), pour limiter une plage de déplacement de la partie entrée en prise (321, 322, 340, 360) dans la première direction (I) à la première plage, et pour limiter une plage de déplacement de la partie entrée en prise (321, 322, 340, 360) dans une direction à gauche et à droite du véhicule (W) à la deuxième plage.

5. Véhicule à selle selon la revendication 4, dans lequel
la partie de venue en prise (232, 227) comporte une ouverture en forme de fente (232) s'étendant dans la première direction (I), et
la partie entrée en prise (321, 322, 340, 360) comporte un arbre de guidage (321) inséré dans l'ouverture en forme de fente (232).

6. Véhicule à selle selon la revendication 4, dans lequel
la partie de venue en prise (232, 227) est configurée pour limiter une plage de déplacement de la partie entrée en prise (321, 322, 340, 360) dans une direction en avant et en arrière (L) du véhicule à une troisième plage plus petite que la première plage.

7. Véhicule à selle selon la revendication 6, dans lequel
la partie de venue en prise (232, 227) comporte une ouverture en forme de fente (232) s'étendant dans la première direction (I), et
la partie entrée en prise (321, 322, 340, 360) comporte
un arbre de guidage (321) inséré dans l'ouverture en forme de fente (232), et
un arrêtoir (322) prévu à une extrémité de pointe de l'arbre de guidage (321), et
une mesure de l'arrêtoir (322) dans la direction à gauche et à droite du véhicule (W) est supérieure à une largeur de l'ouverture en forme de fente (232) dans la direction à gauche et à droite du véhicule (W).

8. Véhicule à selle selon la revendication 7, dans lequel
l'élément de maintien (340, 360) comporte un deuxième boulon (340) et un écrou (360),
l'un parmi le deuxième boulon (340) et l'écrou (360) est un élément de fixation fixe fixé à l'autre parmi les premier et deuxième éléments (220, 310), et un autre parmi le deuxième boulon (340) et l'écrou (360) est un élément de fixation déplaçable pouvant tourner par rapport à l'élément de fixation fixe,
l'écrou (360) est fixé à une partie de vis (342) du deuxième boulon (340) qui ressort de l'ouverture en forme de fente (232) lorsque le deuxième boulon (340) est inséré dans l'ouverture en forme de fente (232),
l'élément de maintien (340, 360) peut être changé entre le premier état et le deuxième état selon un niveau de fixation de l'élément de fixation déplaçable à l'élément de fixation fixe,
l'arbre de guidage (321) comporte une partie du deuxième boulon (340), à l'exception d'une partie de tête (341), et
l'arrêtoir (322) comporte l'écrou (360) ou la partie de tête (341) du deuxième boulon (340).

9. Véhicule à selle selon la revendication 8, dans lequel
l'élément de fixation déplaçable présente un moyen de saisie (361) qui peut être saisi par un utilisateur.

10. Véhicule à selle selon la revendication 9, dans lequel
le moyen de saisie (361) est positionné d'un côté arrière du pare-brise (300).

11. Véhicule à selle selon la revendication 10, comprenant par ailleurs un dispositif d'affichage (410) qui affiche les informations relatives à un état du véhicule, dans lequel
le dispositif d'affichage (410) est prévu à une position où le dispositif d'affichage (410) peut être vu par un conducteur, et
le moyen de saisie (361) est disposé à une position plus élevée que le dispositif d'affichage (410).

12. Véhicule à selle selon l'une quelconque des revendications 1 à 11, dans lequel
le deuxième élément (310) présente une superficie et un volume qui sont inférieurs à ceux du premier élément (220).

13. Véhicule à selle selon l'une quelconque des revendications 1 à 12, comprenant par ailleurs un support de phare qui supporte un phare (210) au niveau du corps principal de véhicule, dans lequel
le support de phare sert également de premier élément (220).
